# EUROPÄISCHE PATENTSCHRIFT

(11) **EP 1 189 330 B1**
(45) Veröffentlichungstag und Bekanntmachung des Hinweises auf die Patenterteilung: **14.03.2012**
(21) Anmeldenummer: 01116902.6
(22) Anmeldetag: 11.07.2001
(51) Int. Cl.: H02K 7/116, C23C 22/62

(54) **Verfahren zur Behandlung einer Komponente einer Welle-Hohlwelle-Passungs-Verbindung eines Getriebemotors und eine Welle-Hohlwelle-Passungsverbindung eines Getriebemotors**
Process for treating a component of a bore and shaft mounting arrangement of a geared motor and bore and shaft mounting arrangement of a geared motor having such a treatment
Procédé pour traiter un composant d'un montage arbre-alésage d'un motoréducteur et ensemble arbre-alésage d'un tel motoréducteur traité suivant ce procédé

(30) Priorität: 23.08.2000 DE 10041422
(43) Veröffentlichungstag der Anmeldung: 20.03.2002
(73) Patentinhaber: SEW-EURODRIVE GmbH & Co. KG, 76646 Bruchsal (DE)
(72) Erfinder: Vitallowitsch, Udo, 76696 Forst (DE)

(56) Entgegenhaltungen:
- EP-A- 0 497 663
- EP-A- 0 737 819
- GB-A- 464 656

## Beschreibung

Die Erfindung betrifft ein Verfahren zur Behandlung einer Komponente einer Welle-Hohlwelle-Passungs-Verbindung eines Getriebemotors und eine Welle-Hohlwelle-PassungsVerbindung eines Getriebemotors.

Zum Schützen von metallischen Teilen sind verschiedene Verfahren oder Mittel bekannt. Beispielsweise kann ein metallisches Teil eingefettet oder eingeölt werden. Der so erreichbare Korrosionsschutz ist aber, insbesondere bei Freibewitterung, also ungeschützter Lagerung im Freien, oder bei Übersee-Transport nur von kurzer Dauer. Insbesondere die Fließeigenschaften von fettigen oder öligen Stoffen bedingen diese kurze Dauer, beispielsweise 3 Monate.

Behandlungen mit phosphathaltigen Stoffen verändern die Oberfläche des metallischen Teils zum Zwecke des Korrosionsschutzes derart, dass zwar ein Korrosionsschutz entsteht. Aber auch dieser ist bei hoher Luftfeuchtigkeit, Regen oder bei tropische Temperaturen nur ein begrenzter Korrosionsschutz und hält somit nur ungenügend lange. Außerdem ist bei einer solchen Behandlung ein Maßauftrag, also eine Volumenänderung des behandelten Bereiches, des metallischen Teils zu berücksichtigen. Mit industrieüblichen Messmaschinen mit einem typischen Auflösungsvermögen von etwa 1µm ist diese Maßänderung feststellbar und die Konstruktion muss eine solche Behandlung berücksichtigen.

Aus der GB 464 656 A ist ein Verfahren zum Behandeln von Teilen bekannt, wobei ein einem ersten Verfahrensschritt Fett entfernt wird, danach das Teil mit Natriumnitrit, Natriumnitrat und Natriumhydroxid bei 145° C bis 155°C für 10 oder 20 Minuten behandelt wird und abschließend mit sauberem Wasser gewaschen wird.

Der Erfindung liegt daher die Aufgabe zugrunde, einen Getriebemotor und ein Verfahren zur Behandlung einer Komponente eines Getriebemotors unter Vermeidung der vorgenannten Nachteile weiterzubilden. Insbesondere soll eine kostengünstige Behandlung zum Korrosionsschutz erreicht werden.

Erfindungsgemäß wird die Aufgabe bei dem Verfahren nach den in Anspruch 1 angegebenen Merkmalen und bei der Verbindung nach den in Anspruch 3 angegebenen Merkmalen gelöst.

Von Vorteil ist dabei, dass für die Lagerung der Komponente kein Auftragen eines Fettes oder Öles oder dergleichen notwendig ist. Somit entfallen hohe Kosten. Außerdem ist der Korrosionsschutz der behandelten Oberfläche dauerhafter, insbesondere unter Freibewitterung. Weiterer wesentlicher Vorteil ist, dass die Oberfläche behandelt ist. Das Material wird also nicht in der Tiefe sondern nur an der Oberfläche behandelt. Unter Oberfläche ist dabei nicht der idealisierende mathematische Begriff zu verstehen sondern der äußere Bereich der Komponente mit Höhen und Tiefen im atomaren oder molekularen Bereich. Insbesondere weist eine geschliffene oder gefräste Oberfläche von beispielsweise Stahl im Mikrobereich Höhen und Tiefen, wie Furchen, Krater oder dergleichen, auf, die sich über einen Bereich von einigen Mikrometern erstrecken können, beispielsweise 5µm oder gar 20µm. Mit Messmaschinen, die Messtaster mit einem oder mehrere Millimeter großem Durchmesser aufweisende Messkugeln, sind kleine Krater oder dergleichen im Mikrometerbereich nur schwer oder gar nicht feststellbar. Wesentlicher Vorteil der Erfindung ist, dass die derartige Oberfläche nur bis zu einer Tiefe von einigen Mikrometern behandelt wird. Somit sind die Volumenänderungen schon von daher begrenzt und derart klein, dass die Geometrie der Komponente im Wesentlichen ungeändert ist und für die Komponente der von der Konstruktion vorgesehenen Zweck erfüllbar ist. Außerdem ist ein Vorteil, dass die Oberfläche behandelt ist. Somit entfallen Verunreinigungen, wie Fette oder dergleichen, die innerhalb des Getriebes den Schmierstoff des Getriebes verunreinigen können. Ein weiterer wesentlicher Vorteil ist, dass die Oberfläche, also die gesamte Oberfläche, der Komponente behandelbar ist.

Erfindungsgemäß wird mit Mitteln zum geometrischen Vermessen der Komponente kein Unterschied im Rahmen der Messgenauigkeit zwischen der Komponente vor der Behandlung und derselben Komponente nach der Behandlung festgestellt, wobei die Mittel eine Messungenauigkeit von 1 µm oder mehr aufweisen. Somit muss die Konstruktion die Behandlung nicht berücksichtigen, da keine Änderung der Geometrie bis zu der üblicherweise gemessenen Genauigkeit feststellbar wäre.

Vorteiligerweise weist die Komponente keine oder eine verminderte Tribokorrosion im Vergleich zur Verwendung derselben unbehandelten Komponente auf. Insbesondere ist die Tribokorrosion und/oder der Passungsrost bei einer Welle-Hohlwelle-Verbindung vermindert. Somit kann auf Pasten oder dergleichen verzichtet werden und es sind Kosten einsparbar.

Vorteiligerweise wird bei der Lagerung auf der behandelten Oberfläche weniger Staub angelagert als bei einer eingefetteten, eingeölten oder mit einem Mittel eingesprühten Oberfläche. Somit ist die Lagerung einfach ausführbar und die Komponenten sind nach der Lagerung ohne Reinigungsvorgang einsetzbar.

Bei einer vorteilhaften Ausgestaltung ist die Komponente eine Achse, Welle oder Hohlwelle. Von Vorteil ist dabei, dass kein Fett oder Öl aufgebracht ist, sondern die Komponenten direkt einsetzbar sind. Sogar bei eine Verzahnung tragenden Komponenten ist die erfindungsgemäße Behandlung einsetzbar und beeinflusst sogar die Reibungsverhältnisse, insbesondere beim Wälzen positiv.

Erfindungsgemäß werden kostengünstige Stoffe verwendet und die Anzahl der Verfahrensschritte ist derart klein, dass das Verfahren in einfacher und kostengünstiger Weise in den industriellen Produktionsprozess integrierbar ist.

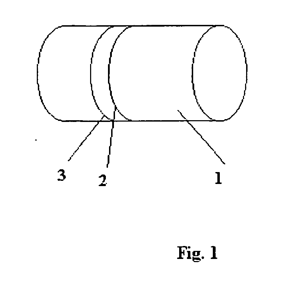

In der Figur 1 ist eine Welle 1 skizziert. Sie dient zur Verwendung in einem Getriebe. Dabei dichtet ein Wellendichtring, der eine Dichtlippe und eine Staublippe aufweist, das Innere des Getriebes gegen das Äußere ab. Vor Einbau in das Getriebe wurde die Welle 1 zum Korrosionsschutz behandelt. Die Welle 1 ist in der Figur 1 im aus dem Getriebe nach einer mehrtägigen Betriebszeit herausgenommenen Zustand gezeigt. An den Stellen der Berührung von Welle 1 mit Dicht- oder Staublippe ist die Oberfläche im Mikrobereich verschlissen und der Abrieb 2 der Dichtlippe sowie der Abrieb 3 der Staublippe sind durch farbliche Änderung erkennbar. In der Figur 1 ist der jeweilige Abrieb (2,3) schwarz gezeigt, wohingegen an der wirklichen Welle 1 an diesen Stellen die Farbe des blanken Stahls auftritt. Die wirkliche Welle 1 ist ansonsten infolge der Behandlung der Oberfläche schwärzlich gefärbt.

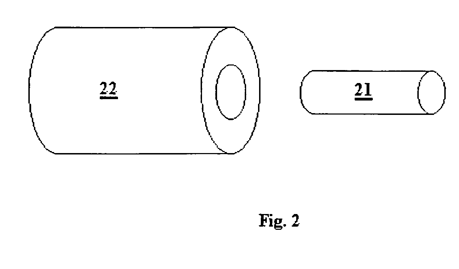

Figur 2 zeigt eine erfindungsgemäße Welle 21, die in eine Hohlwelle 22 gesteckt ist und als unbehandelte Wellen infolge der hohen Reibung nach kurzer Zeit Passungsrost und/oder andere Kennzeichen von Tribokorrosion aufweist. Die erfindungsgemäß behandelten Welle 21 und Hohlwelle 22 entwickeln im selben Zeitraum weniger oder gar keinen Passungsrost. Die beim Stand der Technik eingesetzten Teflon-Pasten, Kupfer-Pasten oder sonstige Pasten, sind daher bei Verwendung der Erfindung entbehrlich und es werden dabei Kosten erheblich reduziert. Die Kosten für die Behandlung jedoch sind nur unbedeutend.

Zusätzlich können verzahnte Teile, wie Zahnräder, Ritzel von Zahnradgetrieben oder Kurvenscheiben von Zyklogetrieben oder Komponenten von Kegelradgetrieben, wie Kegelrad oder Kegelritzel, oder bei einem Spiroplangetriebe das Rad oder das Ritzel behandelt werden. Dabei ist zusätzlich von Vorteil, dass die Einlaufzeit für Getriebe verkürzt ist, da die behandelte Komponente an ihrer Oberfläche dazu geeignet verändert ist und eine bessere Gleitwirkung aufweisen. Insbesondere bei Spiroplangetrieben ist das Rad nur fräsbar mit einem Werkzeug, das entsprechend dem Spiroplan-Ritzel geformt ist und daher die Bewegung im Eingriff durchläuft. Das Rad ist also in einfacher Weise nicht schleifbar. Die so entstandene gefräste Oberfläche benötigt daher eine große Einlaufzeit. Diese wird aber bei einer behandelten Oberfläche verkürzt wegen der besseren Reibverhältnisse.

Die Komponenten aus Figur 1 und 2, also Welle (1, 21) und Hohlwelle 22 und die genannten verzahnten Teile werden in ihren geometrischen Abmessungen nur unwesentlich verändert. Selbstverständlich ändern sich im atomaren Bereich viele wesentlichen Parameter, insbesondere auch geometrische. Mit einer in der Industrie üblichen Messmaschine jedoch, die ein Auflösungsvermögen oder eine Messungenauigkeit von etwa 1µm aufweist, ist keine Änderung feststellbar. Dies ist ein entscheidender Vorteil des erfindungsgemäßen Verfahrens. Denn somit ist die bestehende Konstruktion verwendbar und das erfindungsgemäße Verfahren ist in einen bestehenden industriellen Fertigungsprozess in einfacher und kostengünstiger Weise integrierbar. Im gleichen Sinne ändern sich die Messwerte für Rauheit nur unwesentlich.

Das Befetten und Beölen oder Besprühen von Komponenten entfällt bei den erfindungsgemäß behandelten Komponenten. Somit ist mit den erfindungsgemäßen behandelten Komponenten auch beim Einlagern oder vor einem lange andauernden Transport mit wechselnden Umweltbedingungen, wie starke Änderungen von Temperaturen und extreme Werte von Temperatur und Luftfeuchtigkeit oder Seewasser oder dergleichen, kein zusätzlicher Aufwand verbunden.

Die Korrosion läuft bei den erfindungsgemäß behandelten Komponenten langsamer ab als bei eingefetteten oder eingeölten Komponenten.

Bei einem erfindungsgemäßen Ausführungsbeispiel wird die erfindungsgemäße Komponente nacheinander mit verschiedenen Stoffen bei gewissen Temperaturen verschiedene Zeiten lang in Kontakt gebracht. Eine einfache Methode besteht im Durchlaufen verschiedener Bäder mit den jeweils verschiedenen Stoffen.

Die ersten, mit der erfindungsgemäßen Komponente in Kontakt gebrachten Stoffe sind zum Entfetten tauglich. Nach dieser Behandlung muss die Komponente neutralisiert und/oder gewaschen werden. Beispielsweise wird mit Wasser und/oder mindestens einer anderen Flüssigkeit gespült.

Dabei sind verschiedene Stoffe einsetzbar. Insbesondere sind alkalische Reinigungsmittel oder Lösungen geeignet.

Die Komponente wird mit einer stark basischen oder alkalischen Lösung in Kontakt gebracht. Besonders eignet sich hierzu 30 bis 70%ige Natronlauge. Dabei liegt die Temperatur zwischen 60°C und 130°C.

Danach wird die Komponente mit mindestens einer ein Nitrat, ein Nitrit, ein Alkalinitrat und/oder ein Alkalinitrit enthaltenden Lösung in Kontakt gebracht. Dabei liegt die Temperatur zwischen 110°C und 130°C.

Nach diesem Verfahrensschritt kann die Komponente mit einer Borax-Lösung in Kontakt gebracht werden, insbesondere mit einer 4 bis 10 %igen Lösung. Dabei liegt die Temperatur zwischen 110°C und 130°C. Danach wird die Komponente mit einer Tenside enthaltenden Lösung gespült.

Bei vorteilhaften Ausführungsformen werden vor dem In-Kontakt-Bringen mit der Nitrat, Nitrit, Alkalinitrat und/oder Alkalinitrit enthaltenden Lösung Antioxidantien, Hexamethylentetramin und/oder Ammoniumchlorid in weniger als 10%igen Lösungen zugefügt und/oder die Komponente mit solche Stoffe enthaltenden Lösungen in Kontakt gebracht.

Die Dauer des In-Kontakt-Bringens beträgt bei den einzelnen Verfahrensschritten zwischen 10 und 30 Minuten. Durch Änderung der Temperaturen und Konzentrationen kann sich eine Änderung der Zeitdauern als besser erweisen.

Die derart behandelte Komponente zeigt eine schwarze oder schwärzliche Färbung der Oberfläche.

Die behandelte Komponente ist vorteilhaft auch in einer Klebeverbindung verwendbar, die unter Verwendung von anaeroben Klebestoffen erzeugt wird. Solche Klebestoffe härten ohne Luftzufuhr bei Kontakt mit Stahl oder anderen Metallen aus. Beispielsweise umfasst eine solche Klebeverbindung ein verzahntes Teil, wie Zahnrad oder dergleichen, und eine Welle. Die behandelte Komponente stört die Aushärtung des anaeroben Klebestoffes nicht oder nur unwesentlich und verschlechtert die Klebeverbindung nicht oder zumindest nicht unzulässig.

### Bezugszeichenliste

- 1: Welle
- 2: Abrieb der Dichtlippe
- 3: Abrieb der Staublippe
- 21: Welle
- 22: Hohlwelle

## Patentansprüche

1. Verfahren zur Behandlung einer Komponente einer Welle-Hohlwelle-PassungsVerbindung eines Getriebemotors, der ein Getriebe und einen Elektromotor umfasst, zum Korrosionsschutz und zur Verminderung der Tribokorrosion,
wobei die Komponente nach der Endbearbeitung, wie Stoßen, Fräsen, Drehen, Schleifen, Hohnen, Läppen oder dergleichen, derart behandelt wird, dass es einen Korrosionsschutz aufweist und die Maßänderung zwischen der Komponente vor der Behandlung und derselben Komponente nach der Behandlung geringer ist als 1 µm,
wobei bei diesem Behandeln die Komponente mindestens
■ von Fett befreit wird und/oder zur Befreiung von Fett mit mindestens einer basischen oder alkalischen Lösung in Kontakt gebracht wird, die als 30 bis 70%ige Natronlauge vorgesehen ist und eine Temperatur von 60 bis 130°C aufweist,
■ danach mindestens mit Wasser und/oder mindestens einer anderen Flüssigkeit gespült wird,
■ danach mindestens mit einer ein Nitrat, ein Nitrit, ein Alkalinitrat und/oder ein Alkalinitrit enthaltenden Lösung in Kontakt gebracht wird, die eine Temperatur zwischen 110 und 130°C aufweist,
■ danach mindestens mit einer Flüssigkeit zum Waschen und /oder einer Tenside enthaltenden Lösung in Kontakt gebracht wird,
wobei die Dauer des In-Kontaktbringens bei den einzelnen Verfahrensschritten jeweils zwischen 10 und 30 Minuten beträgt.

2. Verfahren nach Anspruch 1,
**dadurch gekennzeichnet, dass**
Antioxidantien, Hexamethylentetramin und/oder Ammoniumchlorid in weniger als 10%igen Lösungen bei den Verfahrensschritten verwendet werden, insbesondere hinzugefügt werden.

3. Welle-Hohlwelle-Verbindung eines Getriebemotors, der ein Getriebe und einen Elektromotor umfasst,
wobei die Welle-Hohlwelle-Verbindung als Komponenten eine Welle und eine Hohlwelle umfasst, wobei die Welle in die Hohlwelle eingesteckt ist,
die Welle-Hohlwelle-Verbindung eine Passungsverbindung ist,
wobei mindestens eine Komponente der Verbindung hergestellt ist nach einem Verfahren nach Anspruch 1 oder 2, wobei die Maßänderung zwischen der Komponente vor der Behandlung und derselben Komponente nach der Behandlung geringer ist als 1 µm.

4. Welle-Hohlwelle-Verbindung nach Anspruch 3,
**dadurch gekennzeichnet, dass**
das Getriebe eine Spiroplan-, Kegelrad, Zyklo-, Exzenter und/oder Zahnradgetriebestufe umfasst.

## Claims

1. A process for treating a component of a shaft/hollow shaft mating connection of a gear motor comprising gearing and an electric motor, in order to protect against corrosion and reduce the tribo-corrosion, wherein after the finishing, such as shaping, milling, turning, grinding, honing, lapping or the like, the component is treated in such a manner that it has protection against corrosion and the change in dimension between the component before the treatment and the same component after the treatment is less than 1 µm,
wherein the component is during this treatment at least
• degreased and/or for degreasing brought into contact with at least one basic or alkaline solution, which solution is provided as 30 to 70 % sodium hydroxide solution and has a temperature from 60 to 130°C,
• thereafter is rinsed with at least water and/or at least another fluid,
• thereafter is at least brought into contact with a solution containing a nitrate, a nitrite, an alkali nitrate and/or an alkali nitrite, which solution has a temperature between 110 and 130°C,
• thereafter is at least brought into contact with a fluid for washing and/or a solution containing surfactants,
wherein the duration of the bringing into contact during the individual process steps is in each case between 10 and 30 minutes.

2. A process according to claim 1, **characterised in that** antioxidants, hexamethylenetetramine and/or ammonium chloride are used in less than 10% solutions in the process steps, in particular are added.

3. A shaft/hollow shaft connection of a gear motor which comprises gearing and an electric motor,
wherein the shaft/hollow shaft connection comprises a shaft and a hollow shaft as components, wherein the shaft is inserted into the hollow shaft, the shaft/hollow shaft connection is a mating connection,
wherein at least one component of the connection is manufactured according to a process according to claim 1 or 2, wherein the change in dimension between the component before the treatment and the same component after the treatment is less than 1 µm.

4. A shaft/hollow shaft connection according to claim 3, **characterised in that** the gearing comprises a Spiroplan-, bevel gear, cycloidal-, eccentric and/or toothed wheel gear stage.

## Revendications

1. Procédé de traitement d'un composant d'une jonction ajustée arbre/arbre creux d'un motoréducteur qui comprend un réducteur et un moteur électrique, pour la protection contre la corrosion et pour éviter la tribocorrosion,
dans lequel le composant est traité après l'usinage de finition, tel que mortaisage, fraisage, tournage, rectification, honing, rodage ou analogues, de telle manière qu'il présente une protection contre la corrosion et que la variation dimensionnelle entre le composant avant le traitement et le même composant après le traitement soit inférieure à 1 µm,
le composant étant, lors de ce traitement, au moins
■ débarrassé de toute graisse et/ou, pour être débarrassé de toute graisse, mis en contact avec au moins une solution basique ou alcaline qui est prévue sous la forme d'une lessive de soude de 30 à 70 % et qui présente une température de 60 à 130 °C,
■ rincé ensuite à l'eau et/ou au moins avec un autre liquide,
■ mis ensuite en contact au moins avec une solution contenant un nitrate, un nitrite, un nitrate alcalin et/ou un nitrite alcalin, qui présente une température comprise entre 110 et 130 °C,
■ mis ensuite en contact au moins avec un liquide de lavage et/ou une solution contenant des agents tensio-actifs,
la durée de la mise en contact lors des différentes étapes du procédé étant chaque fois comprise entre 10 et 30 minutes.

2. Procédé selon la revendication 1,
**caractérisé en ce que**
des anti-oxydants, de l'hexaméthyltétramine et/ou du chlorure d'ammonium en solutions inférieures à 10 % sont utilisés, en particulier ajoutés, lors des étapes du procédé.

3. Jonction arbre/arbre creux d'un motoréducteur qui comprend un réducteur et un moteur électrique,
la jonction arbre/arbre creux comprenant en tant que composant un arbre et un arbre creux, l'arbre étant inséré dans l'arbre creux,
la jonction arbre/arbre creux étant une jonction ajustée,
au moins un composant de la jonction étant fabriqué au moyen d'un procédé selon la revendication 1 ou 2, la variation dimensionnelle entre le composant avant le traitement et le même composant après le traitement étant inférieure à 1 µm.

4. Jonction arbre/arbre creux selon la revendication 3,
**caractérisée en ce que**
le réducteur comprend un étage de réducteur spiroplan, à roues coniques, cycloïdal, excentrique et/ou à roues droites.
